(19) Europäisches Patentamt
European Patent Office
Office européen des brevets

(11) **EP 0 536 620 B1**

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int. Cl.⁶: **A47L 15/42**, D06F 39/06, B01D 19/02

(21) Anmeldenummer: **92116612.0**

(22) Anmeldetag: **29.09.1992**

(54) **Haushaltgerät, z.B. Wasch- oder Geschirrspülmaschine**

Household appliance, e.g. washing machine or dishwasher

Appareil ménager, p.e. machine à laver ou machine à laver la vaisselle

(84) Benannte Vertragsstaaten:
**DE FR GB IT**

(30) Priorität: **10.10.1991 DE 4133554**

(43) Veröffentlichungstag der Anmeldung:
**14.04.1993 Patentblatt 1993/15**

(73) Patentinhaber:
• **Bauknecht Hausgeräte GmbH**
  **D-70565 Stuttgart (DE)**
  Benannte Vertragsstaaten:
  **DE**

• **Whirlpool Europe B.V.**
  **NL-5657 EB Eindhoven (NL)**
  Benannte Vertragsstaaten:
  **FR GB IT**

(72) Erfinder: **Schäfer, Martin**
  **W-6680 Neunkirchen (DE)**

(74) Vertreter: **Fleck, Hermann-Josef, Dr.-Ing. et al**
  **Patentanwaltsbüro**
  **A. Jeck & H.-J. Fleck**
  **Markgröninger Strasse 47/1**
  **D-71701 Schwieberdingen (DE)**

(56) Entgegenhaltungen:
  **SU-A- 1 457 953**      **US-A- 2 729 219**
  **US-A- 3 557 579**

**Beschreibung**

Die Erfindung bezieht sich auf ein Kaushaltsgerät, z.B. auf eine Wasch- oder Geschirrspülmaschine, mit einem feststehenden Wasserbehälter und einer von einem Motor rotierend angetriebenen Vorrichtung mit einem tellerförmigen Bodenteil zur Schaumzerstörung, die im Umwälzkreislauf für die Flotte angeordnet ist.

Bedingt durch Speisereste in einer Geschirrspülmaschine kann beim maschinellen Geschirrspülen, z.B. durch pflanzliche oder tierische Eiweiße, Schaum entstehen. Dieser Schaum bindet das zum Spülen notwendige Wasser und verringert zudem die Rückflußgeschwindigkeit des Wassers zur Umwälzpumpe. Dadurch verschlechtert sich bei konstanten Wasserfüllmengen das Reinigungsergebnis infolge der geringeren mechanischen Einwirkung auf das Spülgut. Bei Geräten mit schmutzabhängigen Wasserzulaufmengen, die z.B. durch die Überwachung des druckseitigen Umwälzpumpendruckes gesteuert werden, zieht das Spülgerät entsprechende Wassermengen nach, um so die mechanische Wirkung aufrecht zu halten (siehe z.B. DE-PS 26 46 383). Eine derartige Ausführung garantiert zwar immer ein gutes Reinigungsergebnis, hat aber auch einen erhöhten Wasserverbrauch zur Folge. Die Einhaltung der PI-Daten ist somit nicht immer gewährleistet.

Aus den genannten Gründen ist es sinnvoller, die Entstehung von Schaum überhaupt zu verhindern oder den entstandenen Schaum zu zerstören. In den handelsüblichen Detergenzien sind Entschäumer enthalten, die aber nur bis zu einem gewissen Grad wirksam sind und außerdem die Abwasserkennzahl verschlechtern.

Ein Haushaltsgerät der eingangs beschriebenen Art ist in der US-A - 3557579 als bekannt ausgewiesen. Bei diesem bekannten Haushaltsgerät, bei dem es sich um eine Waschmaschine handelt, wird die Wäsche von oben in einen drehbaren Innenbehälter gegeben, der im Abstand von einem feststehenden Vorrats-Wasserbehälter umgeben ist. Das aus dem Innenbehälter austretende Wasser wird an den Innenwänden des Vorrats-Wasserbehälters aufgefangen und in dessen unterem Bereich ebenso wie zugeführtes Frischwasser aufgenommen und bei Bedarf mittels einer Pumpe wieder in den Innenbehälter gefördert, deren Eingangsseite im unteren Bereich des Vorrats-Wasserbehälters angeschlossen ist. Der Innenbehälter ist auf einer von unten senkrecht durch den Boden des Vorrats-Wasserbehälters geführten Welle angebracht; auf der Welle ist zwischen der Unterseite des Innenbehälters und dem Boden des Vorrats-Wasserbehälters eine Vorrichtung zur Schaumzerstörung mit einem wannen- oder tellerförmigen mit Löchern versehenen Bodenteil und einem Schaufelrad festgelegt. Die Vorrichtung zur Schaumzerstörung ist nur über einen zentralen Teilbereich des Vorrats-Wasserbehälters ausgedehnt und erfaßt somit nicht den gesamten, über die Pumpe geförderten Wasserdurchsatz. Außerdem sind die Schaufeln der Schaufelräder erforderlich, um den Schaum zu erfassen und durch die Löcher des Bodenteils zu leiten. Die Vorrichtung ist an die Drehung des Innenbehälters gebunden.

Durch die DE-OS 17 60 809 ist eine Wäschebehandlungsmaschine bekannt geworden, die eine Vorrichtung zum Niederschlagen von Waschmittelschaum enthält. Diese Maschine ist mit Mitteln zur Zufuhr elektrischer oder mechanischer Energie versehen, die den Zerfall des Waschmittelschaumes beschleunigt. In der Vorrichtung zum Niederschlagen des Waschmittelschaumes kann dabei z.B. eine Heizung, ein Wasserzerstäuber oder ein rotierendes Schlagwerk angeordnet sein. Bei der bekannten Bauart soll die Zerfallsgeschwindigkeit des Schaumes durch Erwärmung oder Einwirkung mechanischer Kräfte erhöht werden. Die bekannten Vorrichtungen liegen vorteilhaft im Zuge eines aus dem Behandlungsraum der Maschine führenden Überlaufes, aus dem während des Betriebes der Waschmaschine Schaum austreten kann. Diese Vorrichtungen sind dabei als besondere Bauteile ausgebildet und direkt zwischen einem Waschmitteleinspülkasten und dem Überlauf angeschlossen. Allen Ausführungsformen zur Zerstörung des Schaumes wird lediglich nur Schaum, jedoch kein Wasser zugeführt. Bei der Ausführungsform mit einem Schlagwerk wird dem axial an das Schlagwerk geführten Schaum durch die Rotationsbewegung Bewegungsenegie zugeführt. Beim Verlassen der rotierenden Flügel und beim Aufprall auf starre Wände sollen dabei die Schaumblasen gesprengt werden. Die ausgeprägten Flügel des mechanischen Schlagwerkes können zur Folge haben, daß der Schaum nicht, wie gewünscht, zerstört wird, sondern daß neuer Schaum geschlagen wird.

Die Entstehung von Schaum infolge von Eiweißen und die Schaummenge sind im wesentlichen abhängig von der Verschmutzungsart bzw. dem Verschmutzungsgrad des zu reinigenden Spülgutes. Wenn man die Entstehung verhindern wollte, würde das bedeuten, das Spülgut vorzureinigen. Dies ist aber sinngemäß Aufgabe eines Geschirrspülers. Die Entstehung von Schaum infolge der Detergenzien hängt von der Art und der Menge der verwendeten Detergenzien ab.

Der Erfindung liegt die Aufgabe zugrunde, den beim Betrieb einer Haushaltsmaschine entstehenden Schaum mit einfachen Mitteln besser als bisher durch Zerstörung des Schaumes abzubauen.

Diese Aufgabe wird bei einem Haushaltsgerät der eingangs genannten Art dadurch gelöst, daß die Vorrichtung als Zentrifuge ausgebildet ist und zwischen einer im Boden des Wasserbehälters angeordneten Öffnung und einer im Umwälzkreislauf angeordneten Umwälzpumpe derart angeordnet ist, daß das Gemisch aus Flotte und Schaum axial in die Zentrifuge eintritt. Diese Bauart hat den Vorteil, daß für die Zerstörung des Schaumes keine besondere, eigene Behandlungskammer vorgesehen ist, wie dies bei der Bauart gemäß der DE-OS 17 60 809 der Fall ist. Gemäß der Erfindung ist die schaumzerstörende Zentrifuge vielmehr an einem Ort eingesetzt, an dem die gesamte Spülflotte vorbeifließt. Eine Trennung von Schaum und Spüllauge ist somit nicht gegeben, und damit wird die Zentrifuge von einem Gemisch aus Schaum und Spüllauge durchflossen. Die Ausbildung der Zentrifuge mit einem tellerförmigen Bodenteil hat den Vorteil, daß keine Schlagwirkung auf die Flotte und den eintretenden Schaum ausgeübt wird, wodurch eine Bildung von Schaum an dieser Stelle vermieden wird. Bei einer Bauart gemäß der Erfindung tritt das Gemisch aus Flotte und Schaum axial in die Zentrifuge ein und wird durch den tellerförmigen Bodenteil auf einer Spiralbahn radial nach außen beschleunigt. Durch die sehr unterschiedlichen Dichten von Luft und Wasser wirken auf deren Moleküle verschieden starke Zentrifugalkräfte, wodurch der Schaum während der Beschleunigung zerstört wird.

Die auf ein Teilchen wirkende Kraft berechnet sich wie folgt:

$$F_z = \rho \cdot V \cdot r \cdot w^2,$$

darin bedeuten

$\rho$ = spezifische Dichte
$V$ = Volumen
$r$ = Radius
$w$ = Winkelgeschwindigkeit

Die Zentrifuge ist zwischen einer im Boden des Wasserbehälters angeordneten Öffnung und einer im Umwälzkreislauf angeordneten Umlaufpumpe angeordnet. Diese Lage gewährleistet eine zuverlässige und schnelle Förderung der gesamten Flotte durch die Zentrifuge.

Vorzugsweise ist die Zentrifuge innerhalb des im Behälterboden angeordneten Ablaufschachtes angeordnet. Hierdurch ist gewährleistet, daß der Schaum und die Flotte aus dem Behälter in die Mittelöffnung der Zentrifuge fließen und wirksam und unmittelbar nach außen beschleunigt werden, wenn die Zentrifuge im Betrieb ist.

In weiterer Ausgestaltung der Erfindung ist das Bodenteil mit von radial innen nach radial außen abfallenden Bereichen versehen und weist einen nach schräg außen und oben gerichteten Rand auf. Es hat sich herausgestellt, daß diese geschwungene, tellerförmige Bauweise eine wirksame Zerstörung der Schaumteile bewirken.

Eine bevorzugte Ausführungsform besteht darin, daß die Zentrifuge mit einem Deckel versehen ist, der das tellerförmige Bodenteil unter Bildung eines umlaufenden Radialspaltes übergreift und eine zentrale Öffnung zum Durchtritt der Flotte aufweist. Durch die Anordnung des Deckels wird ein Aufschwimmen der Schaumblasen verhindert.

Der Einsatz der Zentrifuge kann im wesentlichen auf bestimmte Programmabschnitte begrenzt werden und/oder gesteuert über den druckseitigen Pumpendruck betrieben werden. Je nach Art und Weise des Betriebes kann der Antrieb direkt oder z. B. in Ankopplung an den vorhandenen Umwälzpumpenmotor erfolgen.

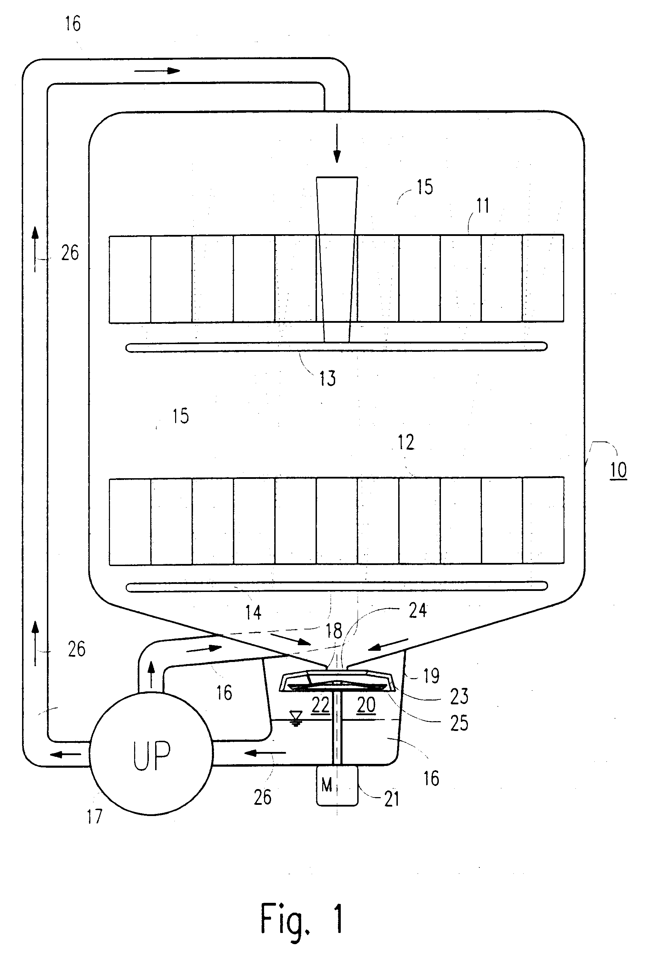

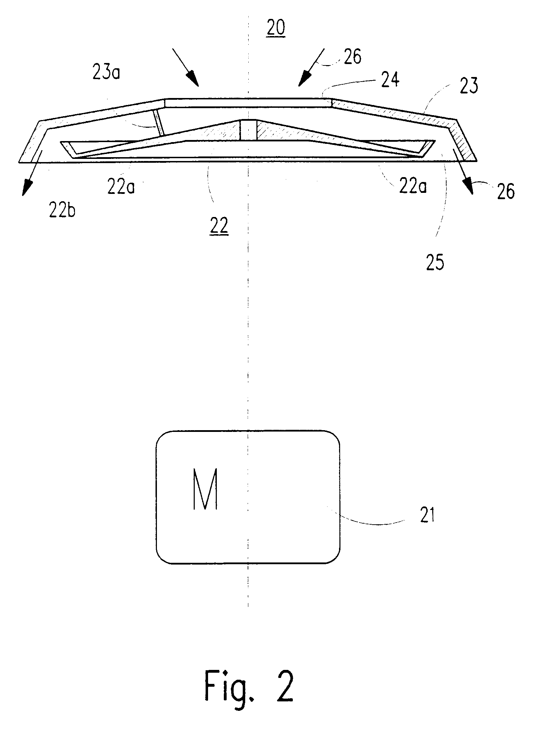

In der Zeichnung ist in den Fig. 1 und 2 ein Ausführungsbeispiel der Erfindung anhand einer Geschirrspülmaschine dargestellt.

Fig. 1 zeigt eine schematische Vorderansicht einer Geschirrspülmaschine mit einer Zentrifuge im unteren Bereich, und

Fig. 2 zeigt in vergrößerter Darstellung eine Schnittdarstellung der Zentrifuge.

Die Geschirrspülmaschine enthält einen Behälter 10 mit zwei Geschirrkörben 11 und 12 und mit zwei Rotoren 13 und 14 zur Verteilung des zur Reinigung erforderlichen Wassers 15. Dieses Wasser wird mit Hilfe einer in einem Umwälzkreislauf 16 angeordneten Umlaufpumpe 17 zu den Rotoren 13, 14 befördert und über das Geschirr verteilt.

Das Wasser löst die Speisereste vom Geschirr ab und läuft an den Wänden des Behälters 10 zusammen oder tropft direkt vom Geschirr und den Körben 11, 12 nach unten. Durch die heftige Bewegung des Wassers zusammen mit den Speiseresten kann Schaum entstehen, der zusammen mit dem Wasser zu der tiefsten Stelle des Behälters 10 und von dort durch eine im Behälterboden angeordnete Öffnung 18 in einen Ablaufschacht 19 läuft, der mit dem Umwälzkreislauf 16 verbunden ist. Hier ist eine Zentrifuge 20 angeordnet, die ein tellerförmiges, durch einen Motor 21 angetriebenes Bodenteil 22 aufweist. Die Zentrifuge 20 besitzt einen Deckel 23, der mit einer Einlaßöffnung 24 zum axialen Eintritt von Schaum und Wasser versehen ist und über Betätigungselemente 23a mit dem Bodenteil 22 verbunden ist. Die Verbindung kann z. B. durch Schrauben, Nieten oder Schweißen erfolgen. Vorzugsweise sind drei derartige Befestigungselemente 23a vorgesehen. Zwischen dem Deckel 23 und dem Bodenteil 22 ist ein radialer Spalt 25 zum Durchtritt der Spülflotte gebildet. Das Bodenteil 22 besitzt nach radial außen und unten abfallende Bereiche 22a und einen nach radial außen und oben sich erstreckenden Rand 22b. Die Umwälzpumpe 17 treibt das Wasser in Pfeilrichtung 26 durch den Umwälzkreislauf 16 und den Behälter 10.

Die durch den Motor 21 angetriebene Zentrifuge 20 beschleunigt die Flotte auf einer Spiralbahn, wobei die Schaumblasen zerplatzen und das Wasser durch die Wand des Schachtes 19 aufgefangen wird. Diese Wand ist so mit dem Zentrifugenaustritt abgestimmt, daS keine neue Schaumbildung beim Sammeln auftritt. Danach steht das Wasser der Umwälzpumpe 17 ohne Schaum wieder zur Verfügung.

**Patentansprüche**

1. Haushaltsgerät, z.B. Wasch- oder Geschirrspülmaschine, mit einem feststehenden Wasserbehälter (10) und einer von einem Motor (21) rotierend angetriebenen Vorrichtung mit einen tellerförmigen Bodenteil (22) zur Schaumzerstörung, die im Umwälzkreislauf (16) für die Flotte angeordnet ist, dadurch gekennzeichnet, daß die Vorrichtung als Zentrifuge (20) ausgebildet ist und zwischen einer im Boden des Wasserbehälters (10) angeordneten Öffnung (18) und einer im Umwälzkreislauf (16) angeordneten Umwälzpumpe (17) derart angeordnet ist, daß das Gemisch aus Flotte und Schaum axial in die Zentrifuge (20) eintritt.

2. Haushaltsgerät nach Anspruch 1, dadurch gekennzeichnet, daß die Zentrifuge (20) innerhalb eines am Behälterboden angeordneten Ablaufschachtes (19) angeordnet ist.

3. Haushaltsgerät nach einem der Ansprüche 1 bis 2, dadurch gekennzeichnet, daß das Bodenteil (22) mit von radial innen nach radial außen abfallenden Bereichen (22a) versehen ist und einen nach schräg außen und oben gerichteten Rand (22b) aufweist.

4. Haushaltsgerät nach einem der Ansprüche 1 bis 3, dadurch gekennzeichnet, daß die Zentrifuge (20) mit einem Deckel (23) versehen ist, der das tellerförmige Bodenteil (22) unter Bildung eines umlaufenden Radialspaltes (25) übergreift und eine zentrale Öffnung (24) aufweist.

## Claims

1. A household apparatus, e.g. a washing machine or a dishwasher, with a fixed water container (10) and with a device, driven rotatably by a motor (21), having a plate-shaped base part (22) to destroy foam, which device is arranged in the circulating path (16) for the washing liquid, characterised in that the device is constructed as a centrifuge (20) and is arranged between an opening (18) arranged in the base of the water container (10) and a circulating pump (17) arranged in the circulating path (16) such that the mixture of washing liquid and foam enters axially into the centrifuge (20).

2. A household apparatus according to Claim 1, characterised in that the centrifuge (20) is arranged inside an outlet shaft (19) arranged on the base of the container.

3. A household apparatus according to one of Claims 1 to 2, characterised in that the base part (22) is provided with regions (22a) falling from radially inwards to radially outwards and has an edge (22b) directed obliquely outwards and upwards.

4. A household apparatus according to one of Claims 1 to 3, characterised in that the centrifuge (20) is provided with a cover (23) which overlaps the plate-shaped base part (22) with the formation of a circulating radial gap (25) and has a central opening (24).

## Revendications

1. Appareil ménager, par exemple, lave-linge ou lavevaisselle comprenant une cuve à eau fixe (10), et un dispositif, entraîné en rotation par un moteur (21) et comprenant une partie de fond (22) en forme d'assiette destiné à la destruction de la mousse, qui est agencé dans le circuit (16) de recirculation de la lessive, caractérisé, en ce que le dispositif est constitué par une centrifugeuse (20) et est disposé entre une ouverture (18) ménagée dans le fond de la cuve à eau (10) et une pompe de circulation (17) agencée dans le circuit de recirculation (16), de telle manière que le mélange de liquide de lavage et de mousse pénètre axialement dans la centrifugeuse (20).

2. Appareil ménager selon la revendication 1, caractérisé, en ce que la centrifugeuse (20) est agencée à l'intérieur d'un puisard d'écoulement (19) ménagé au fond de la cuve.

3. Appareil ménager selon une des revendications 1 et 2, caractérisé, en ce que la partie de fond (22) est munie de régions (22a) en pente descendante de zones radialement intérieures vers des zones radialement extérieures et présente un rebord (22b) dirigé obliquement vers l'extérieur et vers le haut.

4. Appareil ménager selon une des revendications 1 à 3, caractérisé, en ce que la centrifugeuse (20) est munie d'un couvercle (23) qui surmonte la partie de fond (22) en forme d'assiette en formant une fente radiale périphérique (25) et qui présente une ouverture centrale (24) .

Fig. 1

Fig. 2